# EUROPÄISCHE PATENTSCHRIFT

(11) **EP 3 784 972 B1**
(45) Veröffentlichungstag und Bekanntmachung des Hinweises auf die Patenterteilung: **08.06.2022**
(21) Anmeldenummer: 19717854.4
(22) Anmeldetag: 11.04.2019
(51) Int. Cl.: F27B 9/20, F27B 9/36, F27B 17/00, F27D 11/02, B29B 13/02, F27D 99/00, F27D 3/00, B29C 45/14, F27D 5/00

(54) **HEIZVORRICHTUNG**
HEATING DEVICE
DISPOSITIF DE CHAUFFAGE

(30) Priorität: 25.04.2018 DE 102018109945
(43) Veröffentlichungstag der Anmeldung: 03.03.2021
(73) Patentinhaber: KraussMaffei Technologies GmbH, 80997 München (DE)
(72) Erfinder: SCHIERL, Stefan, Germering (DE)
(74) Vertreter: Wilhelm, Ludwig
(86) Internationale Anmeldenummer: PCT/EP2019/059263
(87) Internationale Veröffentlichungsnummer: WO 2019/206663

(56) Entgegenhaltungen:
- DE-A1- 4 105 250
- DE-A1-102014 010 173
- DE-A1-102014 016 365

## Beschreibung

Die Erfindung betrifft eine Heizvorrichtung gemäß dem Oberbegriff von Anspruch 1, eine mit einer solchen Heizvorrichtung ausgestattete Spritzgießanlage sowie ein Verfahren zum Herstellen von Kunststoff-Formteilen aus einem mit einem Kunststoffmaterial umspritzten Halbzeug.

Eine gattungsgemäße Heizvorrichtung ist aus der DE102014010173A1 bekannt. Diese Heizvorrichtung wird üblicherweise in Spritzgießanlagen eingesetzt, um Kunststoff-Formteile herzustellen, die aus einem mit Kunststoffmaterial umspritzten Halbzeug bestehen. Die aus der DE102014010173A1 bekannte Heizvorrichtung verfügt über ein Schlittensystem, mit welchem ein Rahmen durch einen von Heizstrahlern gebildeten Heizbereich hindurchgefahren werden kann.

Gemäß einer ersten Ausführungsform (DE102014010173A1, Figur 4) ist ein Spannrahmen mit mehreren als Klemmen ausgebildeten federbeaufschlagten Haltevorrichtungen vorgesehen. Das Halbzeug wird mittels der Klemmen in seiner Position gehalten. Die Klemmen sind federbeaufschlagt, um thermische Verformungen des Halbzeugs und die Wärmeausdehnung des Spannrahmens auszugleichen. Gemäß einer zweiten Ausführungsform (DE102014010173A1, Figur 5) ist eine aus mehreren Drähten gebildete Drahtauflage in den Rahmen eingespannt, wobei die Drähte zur Kompensation von thermischen Verformungen federbeaufschlagt sind. In diesem Fall ist das Halbzeug nur auf der Drahtauflage abgelegt.

Grundsätzlich wird es als vorteilhaft angesehen, wenn während der Bewegung der Drahtauflage ein Verrutschen des Halbzeugs vermieden werden kann. Bei dem Ausführungsbeispiel gemäß der Figur 5 der DE102014010173A1, bei welchem das Halbzeug nur auf der Drahtauflage aufliegt, können daher nur geringe Verfahrgeschwindigkeiten eingestellt werden. Anders ist die Situation bei dem Ausführungsbeispiel der Figur 4 in der DE102014010173A1, wo federbeaufschlagte Klemmen als Positionierhilfe und zum Halten des Halbzeugs verwendet werden. Mit dieser Ausführungsform können auch höhere Verfahrgeschwindigkeiten vorgesehen werden. Nachteilig hieran ist jedoch, dass diese Positionierhilfen für unterschiedlich gestaltete Halbzeuge jeweils individuell angepasst sein müssen. Wenn solche Positionierhilfen aus einem metallischen Material bestehen, heizen sich diese auf, was einige Nachteile mit sich bringt. Zum einen kann es zu Änderungen der Position des Halbzeugs im Ofen kommen und zum anderen kann das Aufheizverhalten des Halbzeugs durch die Wärmekapazität der Positionierhilfe negativ beeinflusst werden.

Ausgehend hiervon liegt der Erfindung die Aufgabe zugrunde, eine Heizvorrichtung anzugeben, die für unterschiedlich geformte Halbzeuge verwendbar ist, ohne dass Anpassungen an der Drahtauflage vorgenommen werden müssen.

Die Lösung dieser Aufgabe erfolgt durch eine Heizvorrichtung mit den Merkmalen von Anspruch 1. Vorteilhafte Ausgestaltungen und Weiterentwicklungen finden sich in den abhängigen Ansprüchen.

Dadurch, dass die Drähte der Drahtauflage elektrisch leitend und dass ausgewählte Drähte mit einer Spannung beaufschlagt und dadurch erwärmt werden können, wobei die Spannung derart einstellbar und/oder regelbar ist, dass die Drähte eine vorgebbare Temperatur einnehmen können, kann die Oberfläche des Halbzeugs über die Schmelztemperatur der Matrix des Halbzeugs erwärmt werden. Dies führt zu einem Verkleben des Halbzeugs mit der Drahtauflage, wodurch eine Positionierhilfe überflüssig ist. Die einmal eingenommene Position beim Ablegen des Halbzeugs auf der Drahtauflage wird nicht mehr verlassen. Auch bei vergleichsweise hohen Verfahrgeschwindigkeiten bleibt das Halbzeug sicher in seiner Position auf der Drahtauflage liegen.

Ein weiterer Vorteil liegt darin, dass ein und dieselbe Drahtauflage für unterschiedlich geformte Halbzeuge verwendbar ist, solange das Halbzeug kleiner ist als die zur Verfügung stehende Auflagefläche der Drahtauflage. Damit kann ein- und dieselbe Drahtauflage für unterschiedlich konturierte Halbzeuge verwendet werden. Bei einem Wechsel des Halbzeugs sind im Unterschied zum Stand der Technik keine Anpassungen an der Drahtauflage vorzunehmen. Da keine Positionierhilfen vorhanden sind, entfallen auch die mit diesen verbundenen Nachteile, wie sie oben genannt worden sind.

Gemäß einer ersten Ausführungsform kann die Drahtauflage von mehreren, parallel zueinander liegenden Drähten, gebildet sein. Ferner ist es möglich, dass die Drahtauflage von mehreren sich kreuzenden Drähten gebildet wird, wobei sich die Drähte vorzugsweise in einem Winkel von 90° kreuzen. An den Kreuzungspunkten kann eine geeignete Isolierung vorgesehen sein.

Vorzugsweise ist an einem oder mehreren der Drähte jeweils ein Temperatursensor vorgesehen, um die Temperatur dieses Drahtes zu messen und eine für das Halbzeug geeignete Temperatur einstellen zu können.

In Weiterbildung der Erfindung kann zum Verfahren der Drahtauflage ein Schlitten vorgesehen sein, der auf einem Schienensystem in den Ofen hinein und aus diesem herausgefahren werden kann. Dabei kann der Ofen und das Schlittensystem in der Weise ausgebildet sein, wie es in DE102014010173A1 der Fall ist, d.h. das Schienensystem erstreckt sich durch den Ofen hindurch derart, dass ein Schlitten mit einer Drahtauflage auf der einen Seite in den Ofen hineingefahren und auf der gegenüberliegenden Seite aus dem Ofen herausgefahren werden kann. Der Ofen und das Schlittensystem können aber auch in der Weise ausgebildet sein, dass der Schlitten mit der Drahtauflage auf ein- und derselben Seite des Ofens in diesen hinein und aus diesem wieder heraus verfahren werden kann.

Weiterhin kann eine Regeleinrichtung vorgesehen sein, mit welcher die Spannung derart einstellbar und/oder regelbar ist, dass die Drähte eine vorgebbare Temperatur beibehalten können. Damit lassen sich äußere Einflüsse, die zu Temperaturschwankungen führen könnten, kompensieren.

Ein bevorzugtes Anwendungsgebiet der erfindungsgemäßen Heizvorrichtung ist eine Anlage zur Herstellung von Kunststoff-Formteilen aus einem Halbzeug, das mit einem Kunststoffmaterial umspritzt ist. Die Anlage umfasst eine an sich bekannte Spritzgießmaschine mit einer Schließeinheit und einer Spritzeinheit, einen Roboter und eine erfindungsgemäße Heizvorrichtung.

Die Erfindung betrifft zudem ein Verfahren zur Herstellung von Kunststoff-Formteilen aus einem Halbzeug, das mit einem Kunststoffmaterial umspritzt ist, wobei das Halbzeug mittels einer erfindungsgemäßen Heizvorrichtung erhitzt wird, wobei die Spannung der Drähte auf einen Wert eingestellt wird, bei welchem die Drähte eine Temperatur annehmen, die ein Anschmelzen des Halbzeugs bewirken, wobei das erhitzte Halbzeug nach dem Ausfahren der Drahtauflage aus dem Ofen von der Drahtauflage entnommen und in einer Spritzgießmaschine mit einem Kunststoffmaterial umspritzt wird. Zum Handhaben des Halbzeugs können an sich bekannte Roboter verwendet werden.

Vorzugsweise können Maßnahmen ergriffen werden, um die Temperatur der Drähte in geeigneter Weise einzustellen, nämlich:
- Vorwärmen der Drähte auf eine Temperatur oberhalb der Schmelztemperatur des Halbzeugs. Für ein Polyamid-Halbzeug bspw. 260°C
- Die Regelung der Temperatur des Drahtrosts erfolgt dabei über mindestens ein Thermoelement, das an einem bzw. die an jeweils einem Draht befestigt werden. Vorzugsweise sind hierzu Thermoelemente mit geringen Abmessungen zu verwenden, um die thermische Masse so gering wie möglich zu halten.
- Zusammen mit einem geeigneten Schaltelement wie einem Solid State Relais (SSR) kann nun die Temperaturerhöhung des Drahts über die Dauer der Beaufschlagung mit elektrischer Spannung geregelt werden, wobei die Temperatur mit dem Thermoelement gemessen wird. Es ist ebenso denkbar statt der Einschaltdauer, die Spannung oder Stromstärke entsprechend anzupassen.
- Eine Temperaturregelung über die Einschaltdauer ist bspw. bereits bei der Temperaturregelung von Keramikheizbändern oder Infrarotstrahlern bekannt und Stand der Technik
- Somit liegt zum Zeitpunkt des Auflegens des Halbzeugs auf den Ofenrost eine oberhalb der Schmelztemperatur temperierte Drahtauflage vor
- Durch den Kontakt zwischen Halbzeug und Drahtauflage, ergibt sich ein Wärmeübergang von der Drahtauflage zum Halbzeug und das Halbzeug bzw. das im Halbzeug enthaltene Matrixmaterial schmilzt
- Bedingt durch den Aufschmelzvorgang entsteht ein Formschluss zwischen aufgelegtem Halbzeug und Drahtauflage.
- Dieser Formschluss führt zu einer zuverlässigen Fixierung des Halbzeugs auf der Drahtauflage und ermöglicht eine schnelle Verfahrbewegung der Drahtauflage ohne Verschiebung des Halbzeugs auf dem Ofenrost.

Im Sinne der vorliegenden Erfindung sind als Halbzeug insbesondere sogenannte Organobleche oder FKV-Einleger anzusehen. Des Weiteren können folgende Produkte als Halbzeuge im Sinne der vorliegenden Erfindung angesehen werden:
- Naturfaserhalbzeuge
- Vlieswerkstoffe
- Sämtliche flächige Halbzeuge bestehend aus Fasern und thermoplastischer oder duroplastischer Matrix.

Typische Faser-Matrix-Kombinationen sind:
- Glasfasergewebe mit Polypropylen oder Polyamid
- Carbonfasergewebe mit Polyamid
- Unidirektionale (UD) Lagenaufbauten mit Polyamid oder Polypropylen
- Naturfaser-Polypropylen-Vlieswerkstoffe

Nachfolgend soll die Erfindung anhand von Ausführungsbeispielen und unter Bezugnahme auf die Figuren näher beschrieben werden. Es zeigen:
- Figur 1: Spritzgießanlage mit einer erfindungsgemäßen Heizvorrichtung;
- Figur 2: Drahtauflage mit parallelen Drähten;
- Figur 3: Drahtauflage mit gekreuzten Drähten.

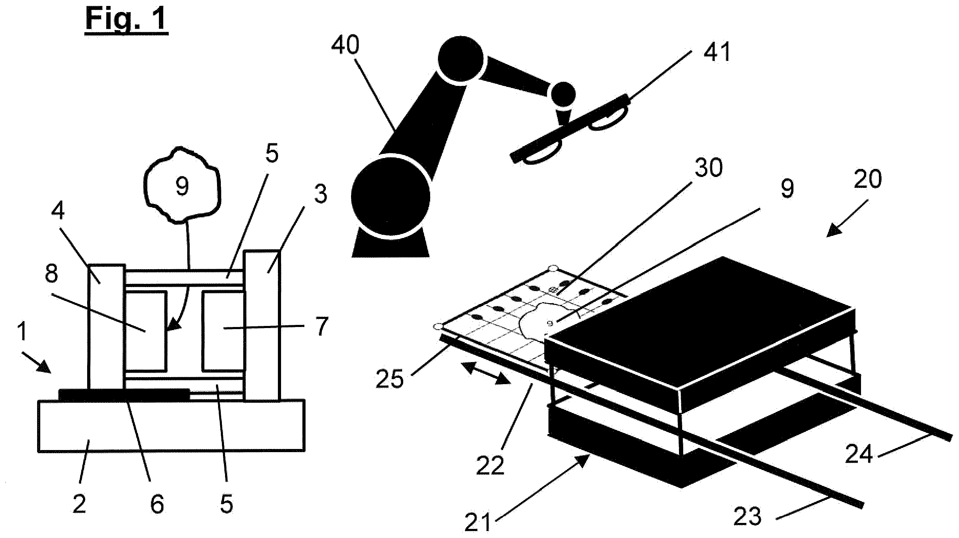

In der Figur 1 ist eine beispielhafte Spritzgießmaschine 1 dargestellt. Die Spritzgießmaschine 1 weist ein Maschinenbett 2 auf. Auf dem Maschinenbett 2 ist eine feststehende Formaufspannplatte 3 befestigt und eine bewegliche Formaufspannplatte 4 linear verschieblich gelagert. Zur ihrer linear verschieblichen Lagerung ist die bewegliche Formaufspannplatte 4 entlang von vier Horizontalsäulen 5 verschiebbar gelagert. Die bewegliche Formaufspannplatte 4 kann beispielsweise durch nicht näher dargestellte hydraulische Antriebe entlang der Längserstreckung der vier Horizontalsäulen 5 bewegt werden. Die bewegliche Formaufspannplatte 4 ist durch Linearführungen 6 horizontal beweglich auf dem Maschinenbett 2 gelagert. Die vorgenannten Bauteile der Spritzgießmaschine bilden zusammen die sogenannte Schließeinheit. An der feststehenden Formaufspannplatte 3 ist eine erste Spritzgießformhälfte 7 befestigt. An der beweglichen Formaufspannplatte 4 ist eine zweite Spritzgießformhälfte 8 befestigt. Die beiden Spritzgießformhälften 7 und 8 sind im vorliegenden Ausführungsbeispiel ausgebildet, ein Organoblech 9 umformen und mit thermoplastischem Kunststoff umspritzen zu können. Das Organoblech 9 kann beispielsweise ein plattenförmiges Organoblech 9 sein. Der besseren Übersicht halber nicht dargestellt ist eine Spritzeinheit, die sich üblicherweise rechts von der feststehenden Formaufspannplatte 3 befindet.

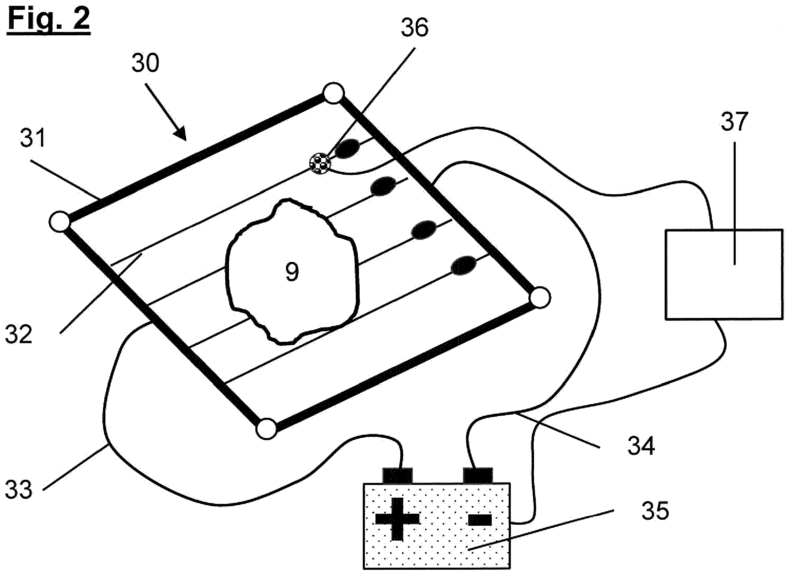

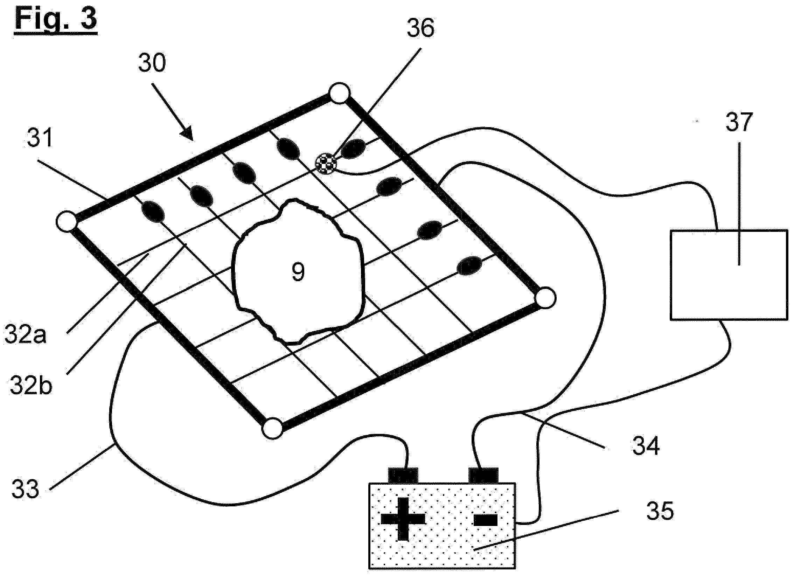

In der Figur 1 ist rechts von der Spritzgießmaschine 1 eine insgesamt mit dem Bezugszeichen 20 gekennzeichnete erfindungsgemäße Heizvorrichtung dargestellt. Diese umfasst im Wesentlichen einen Ofen 21, ein Schlittensystem 22 mit Schienen 23, 24 und einen Schlitten 25. Auf dem Schlitten kann eine erfindungsgemäße Drahtauflage 30 befestigt werden oder befestigt sein. Nähere Erläuterungen zu der Drahtauflage 30 finden sich weiter unten bei der Beschreibung der Figuren 2 und 3. Auf der Drahtauflage 30 kann ein Organoblech 9 oder ein anderes Halbzeug abgelegt werden. Der Schlitten 25 kann mittels geeigneten Antriebsmitteln in den Ofen 20 hinein und wieder aus diesem heraus verfahren werden. Auf diese Weise kann das Organoblech 9 in den Ofen hinein, darin erhitzt, und anschließend wieder aus dem Ofen heraus verfahren werden. Diese Verfahrbewegung soll durch den Doppelpfeil angedeutet werden.

Zwischen der Heizvorrichtung 20 und der Spritzgießmaschine 1 ist ein Roboter 40 angeordnet, der für das Handhaben der Organobleche 9 ausgebildet ist und insbesondere eine geeignete Greifeinrichtung 41 aufweist. Mittels des Roboters 40 kann ein zu erhitzendes Organoblech 9 von einem - hier nicht dargestellten - Vorratsstapel entnommen und auf eine leere Drahtauflage 30 aufgelegt werden. Nachdem das Organoblech 9 erhitzt und aus dem Ofen 20 wieder herausgefahren worden ist, kann mit Hilfe des gleichen Roboters 40 das erhitzte Organoblech 9 in den Raum zwischen die offenen Formhälften 7 und 8 gebracht und dort in seiner Lage für einen Spritzgießvorgang fixiert werden. Selbstverständlich können auch mehrere Roboter, auch mehrere unterschiedliche Roboter, vorgesehen werden, um das Handhaben der bevorrateten Organobleche, der erhitzten Organobleche und der fertigen Kunststoff-Formteile zu bewerkstelligen.

Die Figur 2 zeigt eine erste Ausführungsform einer erfindungsgemäßen Drahtauflage 30. In einem Rahmen 31 sind mehrere Drähte 32 eingespannt, parallel zueinander und in gleichem Abstand voneinander angeordnet. Auf der Drahtauflage 30 ist mittig ein Organoblech 9 aufgelegt. Über Verbindungskabel 33 und 34 sind die Drähte 32 an eine Spannungsquelle 35 angeschlossen. Die Spannungsquelle 35 ist in der Figur 2 der Einfachheit halber als eine separate Batterie dargestellt. Selbstverständlich kann auch jede andere geeignete Spannungsquelle vorgesehen werden, die geeignet ist, die Drähte 32 mit einer hierfür geeigneten Spannung zu beaufschlagen und diese mit dem Effekt der Widerstandsheizung zu erwärmen. Vorzugsweise ist an einem oder mehreren der Drähte 32 ein Temperatursensor 36 vorgesehen, dessen Werte von einem Regler 37 ausgewertet werden können, so dass die Spannungsquelle 35 in geeigneter Weise betrieben werden kann. Der Regler 37 bzw. die Regeleinrichtung 37 dient vorzugsweise dazu, dass die Spannung derart einstellbar und/oder regelbar ist, dass die Drähte 32 eine vorgebbare Temperatur beibehalten.

Es können Maßnahmen ergriffen werden, um die Temperatur der Drähte 32 in geeigneter Weise einzustellen, nämlich:
- Vorwärmen der Drähte auf eine Temperatur oberhalb der Schmelztemperatur des Organoblechs. Für ein Polyamid-Organoblech bspw. 260°C
- Die Regelung der Temperatur des Drahtrosts erfolgt dabei über mindestens ein Thermoelement, das an einem bzw. die an jeweils einem Draht befestigt werden. Vorzugsweise sind hierzu Thermoelemente mit geringen Abmessungen zu verwenden, um die thermische Masse so gering wie möglich zu halten.

- Zusammen mit einem geeigneten Schaltelement wie einem Solid State Relais (SSR) kann nun über die Dauer der Beaufschlagung mit elektrischer Spannung die Temperaturerhöhung gemessen und geregelt werden. Es ist ebenso denkbar die Spannung oder Stromstärke entsprechend anzupassen.
- Eine Temperaturregelung über die Einschaltdauer ist bspw. bereits bei der Temperaturregelung von Keramikheizbändern oder Infrarotstrahlern bekannt und Stand der Technik
- Somit liegt zum Zeitpunkt des Auflegens des Organoblechs auf den Ofenrost eine oberhalb der Schmelztemperatur temperierte Drahtauflage vor
- Durch den Kontakt zwischen Organoblech und Drahtauflage, ergibt sich ein Wärmeübergang von der Drahtauflage zum Organoblech und das Organoblech bzw. das im Organoblech enthaltene Matrixmaterial schmilzt
- Bedingt durch den Aufschmelzvorgang entsteht ein Formschluss zwischen aufgelegtem Organoblech und Drahtauflage.

Dieser Formschluss führt zu einer zuverlässigen Fixierung des Organoblechs auf der Drahtauflage und ermöglicht eine schnelle Verfahrbewegung der Drahtauflage ohne Verschiebung des Organoblechs auf dem Ofenrost

Die Figur 3 zeigt eine zweite Ausführungsform einer erfindungsgemäßen Drahtauflage 30. Im Unterschied zur Figur 2 ist die Drahtauflage von mehreren sich kreuzenden Drähten 32a und 32b gebildet wird, wobei sich die Drähte in einem Winkel von 90° kreuzen. An den Kreuzungspunkten ist eine geeignete Isolierung vorgesehen.

Die erfindungsgemäße Drahtauflage 30 kommt bei einem Verfahren zur Herstellung von Kunststoff-Formteilen aus einem Organoblech 9 oder einem anderen Halbzeug zum Einsatz, das mit einem Kunststoffmaterial umspritzt ist bzw. umspritzt werden soll. Dabei wird Organoblech 9 bzw. das Halbzeug mittels einer Heizvorrichtung vor vorbeschriebenen Art erhitzt. Die Spannung der Drähte 32 oder 32a/32b werden auf einen Wert eingestellt, bei welchem die Drähte eine Temperatur annehmen, die ein Anschmelzen des Organoblechs 9 bewirken. Der Schlitten 25 kann daher mit einer vergleichsweise hohen Verfahrgeschwindigkeit in den Ofen 20 hinein verfahren und nach Erhitzen des Organoblechs 9, wieder aus diesem heraus verfahren werden. Nach dem Ausfahren der Drahtauflage 30 bzw. 32a/32b aus dem Ofen 20 wird das Organoblech 9 von der Drahtauflage entnommen und in der Spritzgießmaschine 1 mit einem Kunststoffmaterial umspritzt.

### Bezugszeichenliste

- 1: Spritzgießmaschine
- 2: Maschinenbett
- 3: Feststehende Formaufspannplatte
- 4: Bewegliche Formaufspannplatte
- 5: Horizontalsäulen
- 6: Linearführungen
- 7: Erste Spritzgießformhälfte
- 8: Zweite Spritzgießformhälfte
- 9: Organoblech
- 20: Heizvorrichtung
- 21: Ofen
- 22: Schlittensystem
- 23: Schiene
- 24: Schiene
- 25: Schlitten
- 30: Drahtauflage
- 31: Rahmen
- 32: Drähte
- 32a: Drähte
- 32b: Drähte
- 33: Verbindungskabel
- 34: Verbindungskabel
- 35: Spannungsquelle
- 36: Temperatursensor
- 37: Regler
- 40: Roboter
- 41: Greifeinrichtung

## Patentansprüche

1. Heizvorrichtung mit einem Ofen (21), in das ein zu erhitzendes Halbzeug (9) ein- und ausgefahren werden kann, mit einer Drahtauflage (30), welche von mehreren voneinander beabstandeten Drähten (32, 32a, 32b) gebildet ist und auf welchem das Halbzeug (9) positionierbar ist, und mit Mitteln (22) zum Verfahren der Drahtauflage (30) in den Ofen (21) hinein und aus diesem heraus,
**dadurch gekennzeichnet, dass**
die Drähte (32, 32a, 32b) elektrisch leitend sind und dass ausgewählte Drähte (32, 32a, 32b) mit einer Spannung beaufschlagt und dadurch erwärmt werden können, wobei die Spannung derart einstellbar und/oder regelbar ist, dass die Drähte (32, 32a, 32b) eine vorgebbare Temperatur einnehmen können oder die Einschaltdauer der Spannungsquelle vorgegeben wird.

2. Heizvorrichtung nach Anspruch 1,
**dadurch gekennzeichnet, dass**
die Drahtauflage (30) von mehreren, parallel zueinander liegenden Drähten (32) gebildet ist.

3. Heizvorrichtung nach Anspruch 1 oder 2 ,
**dadurch gekennzeichnet, dass**
die Drahtauflage von mehreren sich kreuzenden Drähten (32a, 32b) gebildet wird, wobei sich die Drähte (32a, 32b) vorzugsweise in einem Winkel von 90° kreuzen.

4. Heizvorrichtung nach einem der vorstehenden Ansprüche,
**dadurch gekennzeichnet, dass**
an einem oder mehreren der Drähte (32, 32a, 32b) jeweils ein Temperatursensor (36) vorgesehen ist.

5. Heizvorrichtung nach einem der vorstehenden Ansprüche,
**dadurch gekennzeichnet, dass**
zum Verfahren der Drahtauflage (30) ein Schlitten (25) vorgesehen ist, der auf einem Schienensystem (23, 24) in den Ofen (21) hinein- und aus diesem herausgefahren werden kann.

6. Heizvorrichtung nach einem der vorstehenden Ansprüche,
**dadurch gekennzeichnet, dass**
eine Regeleinrichtung (37) vorgesehen ist, mit welcher die Spannung derart einstellbar und/oder regelbar ist, die Drähte (32, 32a, 32b) ein vorgebbare Temperatur beibehalten können.

7. Spritzgießmaschine (1) zur Herstellung von Kunststoff-Formteilen aus einem Halbzeug (9), das mit einem Kunststoffmaterial umspritzt ist, umfassend eine Schließeinheit, eine Spritzeinheit, einen Roboter und eine Heizvorrichtung nach einem der Ansprüche 1 bis 6.

8. Verfahren zur Herstellung von Kunststoff-Formteilen aus einem Halbzeug, das mit einem Kunststoffmaterial umspritzt ist, wobei das Halbzeug mittels einer Heizvorrichtung nach einem der Ansprüche 1 bis 6 erhitzt wird, wobei die Spannung der Drähte auf einen Wert eingestellt wird, bei welchem die Drähte eine Temperatur annehmen, die ein Anschmelzen des Halbzeugs bewirken, wobei das erhitzte Halbzeug nach dem Ausfahren der Drahtauflage aus dem Ofen von der Drahtauflage entnommen und in einer Spritzgießmaschine mit einem Kunststoffmaterial umspritzt wird.

## Claims

1. A heating device with an oven (21), into which a semi-finished product (9) which is to be heated can be moved and moved out, with a wire support (30), which is formed by several wires (32, 32a, 32b) spaced apart from one another, and on which the semi-finished product (9) is able to be positioned, and with means (22) for moving the wire support (30) into the oven (21) and out therefrom,
**characterized in that**
the wires (32, 32a, 32b) are electrically conductive and that selected wires (32, 32a, 32b) can be acted upon with a voltage and thereby heated, wherein the voltage is able to be set and/or able to be controlled in such a way that the wires (32, 32a, 32b) can adopt a predefinable temperature, or the switch-on duration of the voltage source is predefined.

2. The heating device according to Claim 1,
**characterized in that**
the wire support (30) is formed from several wires (32) lying parallel to one another.

3. The heating device according to Claim 1 or 2,
**characterized in that**
the wire support is formed by several wires (32a, 32b) crossing one another, wherein the wires (32a, 32b) cross one another preferably at an angle of 90°.

4. The heating device according to one of the preceding claims,
**characterized in that**
at one or more of the wires (32, 32a, 32b) respectively a temperature sensor (36) is provided.

5. The heating device according to one of the preceding claims,
**characterized in that**
for moving the wire support (30) a carriage (25) is provided, which can be moved on a rail system (23, 24) into the oven (21) and out therefrom.

6. The heating device according to one of the preceding claims,
**characterized in that**
a control device (37) is provided, by which the voltage is able to be set and/or is able to be controlled in such a way that the wires (32, 32a, 32b) can maintain a predefinable temperature.

7. An injection moulding machine (1) for the production of plastic moulded parts from a semi-finished product (9), which is overmoulded with a plastic material, comprising a clamping unit, an injection unit, a robot and a heating device according to one of Claims 1 to 6.

8. A method for the production of plastic moulded parts from a semi-finished product, which is overmoulded with a plastic material, wherein the semi-finished product is heated by means of a heating device according to one of Claims 1 to 6, wherein the voltage of the wires is set to a value at which the wires adopt a temperature which bring about a fusing of the semi-finished product, wherein the heated semi-finished product, after the moving out of the wire support from the oven, is removed from the wire support and is overmoulded with a plastic material in an injection moulding machine.

## Revendications

1. Dispositif de chauffage comprenant un four (21) dans lequel un produit semi-fini (9) chauffé peut être rentré et sorti, comprenant un support de fils métalliques (30) qui est formé de plusieurs fils métalliques (32, 32a, 32b) distants l'un de l'autre et sur lequel le produit semi-fini (9) peut être positionné, et comprenant des moyens (22) pour entrer le support de fils métalliques (30) dans le four (21) et le sortir de celui-ci,
**caractérisé en ce que**
les fils métalliques (32, 32a, 32b) sont conducteurs électriques et que des fils métalliques (32, 32a, 32b) sélectionnés reçoivent une tension et peuvent être ainsi chauffés, sachant que la tension peut être réglée et/ou régulée de telle sorte que les fils métalliques (32, 32a, 32b) peuvent prendre une température pouvant être prédéfinie ou que la durée d'enclenchement de la source de tension est prédéfinie.

2. Dispositif de chauffage selon la revendication 1, **caractérisé en ce que**
le support de fils métalliques (30) est formé par plusieurs fils métalliques (32) parallèles entre eux.

3. Dispositif de chauffage selon la revendication 1 ou 2,
**caractérisé en ce que**
le support de fils métalliques est formé par plusieurs fils métalliques (32a, 32b) qui se croisent, dans lequel les fils métalliques (32a, 32b) se croisent de préférence dans un angle de 90°.

4. Dispositif de chauffage selon l'une des revendications précédentes,
**caractérisé en ce qu'**
un capteur de température (36) respectif est prévu sur un ou plusieurs des fils métalliques (32, 32a, 32b) .

5. Dispositif de chauffage selon l'une des revendications précédentes,
**caractérisé en ce que**
pour déplacer le support de fils métalliques (30), un chariot (25) est prévu qui peut être entré dans le four (21) et sorti de celui-ci sur un système de rails (23, 24).

6. Dispositif de chauffage selon l'une des revendications précédentes,
**caractérisé en ce qu'**
un dispositif de réglage (37) est prévu, avec lequel la tension peut être réglée et/ou régulée de façon à ce que les fils métalliques (32, 32a, 32b) puissent conserver une température pouvant être prédéfinie.

7. Machine de moulage par injection (1) pour fabriquer des pièces en plastique à partir d'un produit semi-fini (9) qui est enrobé avec un matériau plastique, comprenant une unité de fermeture, une unité d'injection, un robot et un dispositif de chauffage selon l'une des revendications 1 à 6.

8. Procédé de fabrication de pièces moulées en plastique à partir d'un produit semi-fini qui est enrobé avec un matériau plastique, dans lequel le produit semi-fini est chauffé au moyen d'un dispositif de chauffage selon l'une des revendications 1 à 6, dans lequel la tension des fils métalliques est réglée à une valeur à laquelle les fils métalliques prennent une température qui a pour effet de faire fondre le produit semi-fini, dans lequel le produit semi-fini chauffé est reçu par le support de fils métalliques après la sortie du support de fils métalliques hors du four, et enrobé avec un matériau de plastique dans une machine de moulage par injection.
